# EUROPÄISCHE PATENTANMELDUNG

(11) **EP 4 184 102 A1**
(43) Veröffentlichungstag der Anmeldung: **24.05.2023**
(21) Anmeldenummer: 22206427.1
(22) Anmeldetag: 09.11.2022
(51) Int. Cl.: F26B 5/04, F26B 9/06

(54) **TROCKNUNGSVERFAHREN, TROCKNUNGSVORRICHTUNG UND VAKUUMFÖRDERER MIT TROCKNUNG**

(30) Priorität: 16.11.2021 DE 102021005688; 06.01.2022 DE 102022000051
(71) Anmelder: Volkmann GmbH, 59494 Soest (DE)
(72) Erfinder: TEGELKAMP, Christopher, 33142 Büren (DE); JÄGER, Roman, 59494 Soest (DE)
(74) Vertreter: Grosse Schumacher Knauer von Hirschhausen

(57) **Zusammenfassung**

Die Erfindung betrifft ein Verfahren und eine Vorrichtung (1) zum Trocknen eines pulvrigen und/oder granulären Materials (2) für die additive Fertigung, insbesondere zum Trocknen eines Metallpulvers oder einer Metallpulvermischung. Das zu trocknende Material (2) ist in einem evakuierbaren Volumen (3), insbesondere in einem Vakuumförderer (4), enthalten. Das evakuierbare Volumen (3) ist mit einer Vakuum-Pumpanordnung (7) fluidisch verbunden. Die Vakuum-Pumpanordnung (7) ist einlassseitig mit dem evakuierbaren Volumen (3) fluidisch verbunden und auslassseitig mit der Umgebung des evakuierbaren Volumens (3). Die Vakuum-Pumpanordnung (7) umfasst auslassseitig einen Sensor (13) zur Erfassung der Feuchtigkeit des aus dem evakuierbaren Volumens (3) abgepumpten Fluids, wobei mit dem Sensor (13) die Restfeuchte des pulvrigen und/oder granulären Materials (2) als Funktion der Feuchtigkeit im abgepumpten Fluid erfasst wird.

## Beschreibung

### GEBIET DER ERFINDUNG

Die Erfindung betrifft ein Verfahren gemäß dem Oberbegriff des Anspruchs 1 und des Anspruchs 2. Das Verfahren dient zum Trocknen eines pulvrigen und/oder granularen Materials für die additive Fertigung, insbesondere zum Trocknen eines Metallpulvers oder einer Metallpulvermischung. Das zu trocknende Material ist in einem evakuierbaren Volumen respektive in einem Behälter, insbesondere in einem Vakuumförderer oder einem Behälter eines Vakuumförderers enthalten. Das evakuierbare Volumen ist mit einer Vakuum-Pumpanordnung fluidisch verbunden. Die Vakuum-Pumpanordnung ist einlassseitig mit dem evakuierbaren Volumen fluidisch verbunden und auslassseitig mit der Umgebung des evakuierbaren Volumens. Unter Trocknen wird hierin das Austreiben einer Flüssigkeit aus dem Material verstanden, wobei die Flüssigkeit Wasser enthalten kann oder aus Wasser gebildet sein kann, und/oder wobei die Flüssigkeit ein Lösungsmittel enthalten kann oder aus einem Lösungsmittel gebildet sein kann. Lösungsmittel kommen beispielsweise beim Binder-Jetting zum Einsatz. Dabei wird das pulvrige und/oder granulare Material zuvor mit einem Binder-Agent verklebt, welcher vor einer Weiterverarbeitung des Materials aus dem Material wieder ausgetrieben werden muss. Auch dieses Austreiben des Binder-Agents gelingt mit den hierin beschriebenen Trocknungs-Maßnahmen.

Die Erfindung betriff außerdem eine Vorrichtung gemäß dem Oberbegriff des Anspruchs 11 und 12. Die Vorrichtung dient demnach zum Trocknen eines pulvrigen und/oder granularen Materials für die additive Fertigung, insbesondere zum Trocknen eines Metallpulvers oder einer Metallpulvermischung. Die Vorrichtung umfasst ein evakuierbares Volumen, in welchen das zu trocknende Material einfüllbar ist. Das evakuierbare Volumen kann als Behälter gebildet sein oder in einem Behälter angeordnet sein. Beim Evakuieren wird die Luft oder ein gasförmiges Fluid aus dem Volumen-Inneren respektive Behälter-Inneren in die Umgebung oder zu einem anderweitigen Fluidhandling gepumpt. Hierfür ist eine Vakuum-Pumpanordnung vorgesehen, die mit dem evakuierbaren Volumen fluidisch verbunden ist. Die Vakuum-Pumpanordnung ist einlassseitig mit dem evakuierbaren Volumen fluidisch verbunden und auslassseitig mit der Umgebung des evakuierbaren Volumens.

Schließlich betrifft die Erfindung einen Vakuumförderer gemäß dem Oberbegriff des Anspruchs 18 und 19. Der Vakuumförderer dient zum Fördern eines pulvrigen und/oder granularen Materials für die additive Fertigung, insbesondere zum Fördern eines Metallpulvers oder einer Metallpulvermischung.

### TECHNOLOGISCHER HINTERGRUND

Bei der additiven Fertigung werden regelmäßig pulvrige und/oder granulare Materialien wie Metallpulver oder Metallpulvermischungen eingesetzt. Damit beim Verarbeiten dieser Materialien in den additiven Fertigungsvorrichtungen hohe Qualität und reproduzierbare Qualität erzielbar werden, bedarf es der Verwendung möglichst trockener Materialmengen, d. h. das Material soll möglichst wenig Feuchtigkeit enthalten. Beim Trocknen respektive Austreiben der Feuchtigkeit aus dem Material kann ein Heizmittel verwendet werden. Zur Bestimmung der Restfeuchte im Material und insofern zur Ermittlung der Dauer eines effizienten Heizvorgangs erfolgt bislang eine sensorische Bestimmung der Restfeuchte durch Einbringen eines Sensors in das pulvrige/granulare Material. Hier setzt die Erfindung ein.

### DARSTELLUNG DER ERFINDUNG

Vor diesem Hintergrund besteht die Aufgabe darin, das Trocknen von pulvrigen und/oder granularen Materialien mit möglichst geringem apparativen und Kosten-Aufwand zu verbessern. Diese Aufgabe wird durch ein eingangs beschriebenes Verfahren nach Anspruch 1 gelöst. Bevorzugte Ausgestaltungen ergeben sich aus den Unteransprüchen und aus den nebengeordneten Ansprüchen. Bei dem Verfahren ist demnach vorgesehen, dass die Pumpanordnung einen Verdrängerpumpe zur Vakuumtrocknung und eine Strahlpumpe zur Vakuumförderung, insbesondere eine ein- oder mehrstufige Ejectorpumpe zur Vakuumförderung, oder einen Verdichter, insbesondere einen Seitenkanalverdichter, zur Vakuumförderung, umfasst. Mit der Vorrichtung kann ein pulvriges und/oder granulares Material gefördert und getrocknet werden, ohne dass das Material zu Trocknen in eine andere Vorrichtung verbracht werden müsste. Es gelingt insofern ein Trocknen des Materials, ohne die zur Vakuumförderung erzeugte Vakuum-Umgebung zu belüften respektive Öffnen. Damit wird nicht nur apparativer Aufwand reduziert, es wird auch vermieden, dass Verunreinigungen und dergleichen in das Material gelangen.

Ein Verbessern des Trocknens von pulvrigen und/oder granularen Materialien mit möglichst geringem apparativen und Kosten-Aufwand gelingt ferner mit einem Verfahren nach Anspruch 2. Bei dem Verfahren nach Anspruch 2 ist vorgesehen, dass die Vakuum-Pumpanordnung auslassseitig einen Sensor zur Erfassung der Feuchtigkeit des aus dem evakuierbaren Volumens abgepumpten Fluids umfasst, wobei mit dem Sensor die Restfeuchte des pulvrigen und/oder granularen Materials als Funktion der Feuchtigkeit im abgepumpten Fluid erfasst wird. Es ist demnach nicht vorgesehen, die Feuchte im evakuierbaren Volumen zu messen und auch nicht im Material, welches in dem Volumen angeordnet ist. Eine u. A. wegen des erforderlichen Explosionsschutzes aufwändige und kostenintensive Materialfeuchtebestimmung direkt im Material entfällt somit, wodurch das erfindungsgemäße Verfahren zur Trocknung respektive Feuchtebestimmung die Material-Handhabung erheblich vereinfacht und damit verbundene Kosten erheblich reduziert. Erfindungsgemäß wird ein Fluid, beispielsweise Luft, aus dem Volumen entfernt und die Bestimmung der Feuchtigkeit in der abgepumpten Luft dient der Bestimmung respektive Berechnung der Restfeuchte im Material. Es ist zweckmäßig, wenn hierzu eine Kalibrierung des Sensors mittels eines Testmediums erfolgt. Das Testmedium kann ein Medium sein, das eine bekannte Feuchte aufweist, so dass die Sensordatenauswertung bei Anwendung des erfindungsgemäßen Verfahrens mit den Daten des Testmediums verglichen werden können.

Die Pumpanordnung kann bevorzugt eine Verdrängerpumpe, etwa eine Ölschieberpumpe, und/oder eine Strahlpumpe, insbesondere eine ein- oder mehrstufige Ejectorpumpe, umfassen. Als mehrstufige Ejectorpumpe kann beispielsweise ein Multijector^{®} verwendet werden. Die Strahlpumpe bewirkt das Fördern des Materials innerhalb der apparativen Anordnung, insbesondere hinein in das evakuierbare Volumen, die Verdrängerpumpe evakuiert das evakuierbare Volumen zur Vakuumtrocknung. Zur Vakuumförderung kann wahlweise (alternativ oder kumulativ) ein Verdichter, insbesondere ein Seitenkanalverdichter, vorgesehen sein. Die Pumpen werden bevorzugt, insbesondere im Regelbetrieb, nicht zeitgleich betrieben. Zuerst wird mit der Strahlpupe (Verdichter) Material gefördert, anschließend wird zwecks Material-Trocknung mit der Verdrängerpumpe evakuiert.

Da die Verdrängerpumpe der Pumpanordnung für das Vakuum-Trocknen vorgesehen ist, ist es zweckmäßig, wenn der Sensor an der Verdrängerpumpe auslassseitig, insbesondere an oder in einem auslassseitigen Strömungskanal der Verdrängerpumpe, angeordnet ist. Insofern sitzt der Sensor im Abluftstrom oder in einem Fluidstrom, der die apparative Anordnung verlässt. Dort ist der Sensor einfach anbringbar und kann, etwa bei Wartungsbedarf, leicht getauscht oder justiert werden. Ein kostspieliger Sensor im Inneren des evakuierbaren Volumens ist nicht erforderlich, so dass Verschmutzungen des Sensors durch das Material im evakuierbaren Volumen keine Relevanz haben. Eine Verschmutzung des erfindungsgemäß im Auslassbereich der Pumpanordnung vorgesehenen Sensors bleibt nahezu vollständig aus. Eine spezielle Zulassung des außerhalb des evakuierbaren Volumens angeordneten Sensors, etwa i. Z. m. Explosionsschutz-Richtlinien wie der Richtlinie 94/9/EG ("ATEX"-Zulassung), ist nicht erforderlich, was den Kostenaufwand für die apparativen Komponenten erheblich reduziert.

In dem evakuierbaren Volumen kann mit der Pumpanordnung eine Saugfluidströmung, insbesondere Saugluftströmung, erzeugt werden, so dass das pulvrige und/oder granulare Material durch einen Volumen-Einlass mittels Saugfluidströmung, insbesondere Saugluftströmung, in das evakuierbare Volumen hineinförderbar und durch einen Volumen-Auslass, bevorzugt mittels Saugfluidströmung, insbesondere Saugluftströmung, aus dem evakuierbaren Volumen herausförderbar ist. Durch die Fluidströmung wird die Trocknung beschleunigt und die Restfeuchte nimmt schneller ab, bis der gewünschte Restfeuchtegrad erreicht ist. Als Saugfluidströmung kann anstelle von Luft oder zusätzlich zur Luft ein (Inert-)Gas vorgesehen sein. Gegebenenfalls ist eine Abluft-Aufbereitung zweckmäßig.

Zum Beschicken der apparativen Anordnung kann zwischen der Pumpenanordnung und dem evakuierbaren Volumen zumindest eine Sperrvorrichtung vorgesehen sein. Durch Betätigen der Sperrvorrichtung kann die Pumpanordnung oder Komponenten der Pumpanordnung fluidisch von dem evakuierbaren Volumen getrennt werden, so dass das Volumen beispielsweise geöffnet werden kann, etwa um das Material einzufüllen oder zu entnehmen.

Zur Optimierung der Genauigkeit der Sensordaten kann zumindest eine Referenzfeuchtigkeit erfasst werden, bevorzugt in der Umgebung des evakuierbaren Volumens. So kann beispielsweise der Feuchtgrad im Material auch dann präzise erfasst werden, wenn das Verfahren bei vergleichsweise hoher Raum- oder Luftfeuchtigkeits-Umgebung betrieben wird. In einer Umgebung mit hoher Luftfeuchtigkeit kann das Material länger getrocknet werden, in einer Umgebung mit vergleichsweise trockner Luft kann die Trocknung beschleunigt werden.

Für die Ermittlung der Restfeuchte des pulvrigen und/oder granularen Materials kann neben dem Sensorsignal auch die Änderung des Sensorsignals mit der Zeit berücksichtigt werden. Der Sensor kann so gebildet sein, dass die Feuchte der Sensorumgebung oder des Sensor-Inneren kapazitiv bestimmt wird.

Insbesondere im Hinblick auf das Trocknen respektive Austreiben von Lösungsmitteln wie Binder-Agents kann es zweckmäßig sein, wenn das evakuierbare Volumen beheizt wird. Hierbei kann eine thermische Unterstützung im Bereich von ca. 90°C bis ca. 250°C, insbesondere von ca. 100°C, vorgesehen sein.

Ein Verbessern des Trocknens von pulvrigen und/oder granularen Materialien mit möglichst geringem apparativen und Kosten-Aufwand gelingt ferner durch eine Vorrichtung nach Anspruch 11. Die Vorrichtung dient zum Trocknen eines pulvrigen und/oder granularen Materials für die additive Fertigung, insbesondere zum Trocknen eines Metallpulvers oder einer Metallpulvermischung. Die Pumpanordnung (7) der Vorrichtung umfasst eine Verdrängerpumpe (11) zur Vakuumtrocknung und eine Strahlpumpe (10) zur Vakuumförderung, insbesondere eine ein- oder mehrstufige Ejectorpumpe (10) zur Vakuumförderung, oder einen Verdichter, insbesondere einen Seitenkanalverdichter, zur Vakuumförderung.

Ein Verbessern des Trocknens von pulvrigen und/oder granularen Materialien mit möglichst geringem apparativen und Kosten-Aufwand gelingt ferner durch eine Vorrichtung nach Anspruch 12. Die Vakuum-Pumpanordnung der Vorrichtung umfasst demnach auslassseitig einen Sensor zur Erfassung der Feuchtigkeit des aus dem evakuierbaren Volumens der Vorrichtung abgepumpten Fluids. Mit dem Sensor ist die Restfeuchte des pulvrigen und/oder granularen Materials als Funktion der Feuchtigkeit im abgepumpten Fluid ((Ab-)Luft, (Inert-)Gas) erfassbar. Die Pumpanordnung kann eine Verdrängerpumpe und/oder eine Strahlpumpe umfassen, insbesondere eine ein- oder mehrstufige Ejectorpumpe, beispielsweise einen Multijector^{®}. Es kann auch ein Verdichter, insbesondere ein Seitenkanalverdichter zur Vakuumförderung vorgesehen sein. Der Sensor kann an der Verdrängerpumpe auslassseitig, insbesondere an oder in einem auslassseitigen Strömungskanal der Verdrängerpumpe, angeordnet sein. In dem evakuierbaren Volumen kann mit der Pumpanordnung, insbesondere mit der Strahlpumpe der Anordnung, eine Saugfluidströmung, insbesondere Saugluftströmung, erzeugbar sein, so dass das pulvrige und/oder granulare Material durch einen Volumen-Einlass mittels Saugfluidströmung, insbesondere Saugluftströmung, in das evakuierbare Volumen hineinförderbar und durch einen Volumen-Auslass, bevorzugt mittels Saugfluidströmung, insbesondere Saugluftströmung, aus dem evakuierbaren Volumen herausförderbar ist. Ein Entleeren des Volumens kann auch schwerkraftbedingt erfolgen mittels Auslass-Öffnung im unteren Bereich des Volumens/Behälters. Es kann zumindest eine Sperrvorrichtung vorgesehen sein, welche zwischen der Pumpenanordnung und dem evakuierbaren Volumen angeordnet ist. Bevorzugt ist jeder Pumpe der Pumpanordnung eine Sperrvorrichtung fluidisch vorgeschaltet, so dass die Pumpwirkung jeder der Pumpen oder beider Pumpen der Anordnung separat mittels erster und zweiter und ggf. weiterer Sperrvorrichtungen blockierbar ist. Die Sperrvorrichtung kann zumindest ein Ventil umfassen. Mit der Sperrvorrichtung kann die jeweilige Pumpe vom Prozess fluidisch abgetrennt werden. Insbesondere für das oben bereits beschriebenen Binder-Jetting kann zumindest ein Heizmittel vorgesehen sein, womit das evakuierbare Volumen beheizbar ist.

Ein Verbessern des Trocknens von pulvrigen und/oder granularen Materialien mit möglichst geringem apparativen und Kosten-Aufwand gelingt ferner durch einen Vakuumförderer nach Anspruch 18. Der Vakuumförderer umfasst demnach eine hierin beschriebene Vorrichtung zum Trocknen des pulvrigen und/oder granularen Materials für die additive Fertigung.

Ein Verbessern des Trocknens von pulvrigen und/oder granularen Materialien mit möglichst geringem apparativen und Kosten-Aufwand gelingt schließlich durch einen Vakuumförderer nach Anspruch 19, in dem ein hierin beschriebenes TrocknungsVerfahren betrieben wird.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen, sowie aus der nachfolgenden Beschreibung und der zugehörigen Zeichnung, in der- beispielhaft - ein Schema einer Trocknungsvorrichtung dargestellt ist. Auch einzelne Merkmale der Ansprüche oder der Ausführungsformen können mit anderen Merkmalen anderer Ansprüche und Ausführungsformen kombiniert werden.

### KURZBESCHREIBUNG DER FIGUREN

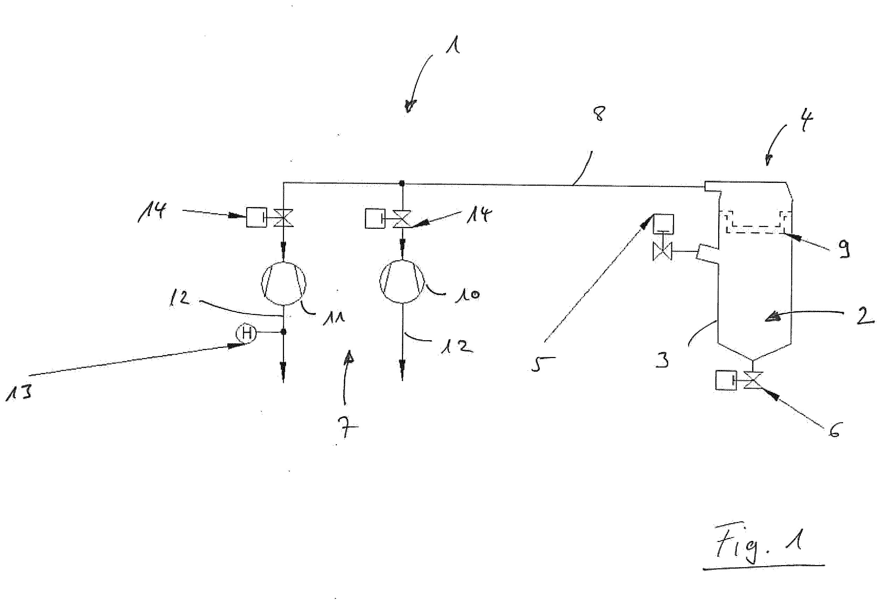

In der Zeichnung zeigen
- Fig. 1: ein Schema einer Trocknungsanordnung.

### DETAILLIERTE BESCHREIBUNG VON AUSFÜHRUNGSBEISPIELEN

Eine Anordnung 1 zum Trocknen eines Materials 2 in einem evakuierbaren Volumen 3 kann der Fig. 1 schematisch entnommen werden. Das evakuierbare Volumen 3 kann als Vakuumförderer 4 gebildet sein oder einen Vakuumförderer 4 umfassen. In dem Vakuumförderer 4 befindet sich das zu fördernde (oder geförderte) und zu trocknende pulvrige und/oder granulare Material 2, welches über ein eine (absperrbare) Einsaugung 5 in das Volumen 3 hineingelangt und über einen (absperrbaren) Materialauslass 6 aus dem Volumen 3 herausförderbar ist.

Der Vakuumförderer 4 ist fluidisch mit einer Pumpanordnung 7 verbunden, etwa über eine (Saug-)Leitung 8 oder ein (Saug-)Rohr. In dem Volumen 3 ist ein Filtermittel 9 angeordnet, mit dem der Fluidstrom zu der Pumpanordnung 7 gefiltert wird, so dass der Fluidstrom frei ist von Pulver oder Stäuben, die von dem Material 2 im Volumen 3 stammen. Die Pumpanordnung 7 umfasst eine erste Pumpe 10 und eine zweite Pumpe 11, die im Regelbetrieb nacheinander betrieben werden. Zuerst wird mit der ersten Pumpe 10 das Material 2 in den Behälter (3, 4) hineingefördert. Anschließend wird mit derzweiten Pumpe 11 das Material 2 mittels Vakuum-Trocknung getrocknet. Damit erst die erste Pumpe 10 und anschließend die zweite Pumpe 11 nacheinander betrieben werden können, ist im Bereich der Pumpeneinlass-Seiten jeweils eine fluidische Sperrvorrichtung 14 vorgesehen. Die Sperrvorrichtung 14 kann ein Ventil umfassen oder aus einem Ventil gebildet sein.

Die erste Pumpe 10 kann als pneumatische Vakuumpumpe, etwa als Ejectorpumpe, gebildet sein. Die zweite Pumpe 11 der Pumpanordnung 7 kann als elektrische (Verdränger-)Vakuumpumpe gebildet sein, beispielsweise als Öl- oder DrehschieberPumpe.

Im Abgasstrom respektive in der Abgasleitung 12 der zweiten Pumpe 11 ist ein (kapazitiver) Feuchtigkeitssensor 13 angeordnet, mit dem die Feuchtigkeit des von der Pumpe 11 aus der Pumpanordnung 7 herausgeförderten Fluids (Luft) erfassbar ist. Durch eine geeignete Kalibrierung, etwa mittels einem Testmedium, kann die Restfeuchte des pulvrigen und/oder granularen Materials 2 in dem Vakuumförderer 4 berechnet werden. Erfasst werden mit dem Sensor 13 Absolutwerte der Feuchte in der Abluft. Bei der Sensorauswertung kann neben den Absolutwerten auch eine Änderung der Sensorwerte mit der Zeit berücksichtigt werden.

### BEZUGSZEICHENLISTE

- 1: Anordnung zum Trocknen
- 2: Material
- 3: Volumen
- 4: Vakuumförderer
- 5: Einsaugung
- 6: Materialauslass
- 7: Pumpanordnung
- 8: Leitung
- 9: Filtermittel
- 10: erste Pumpe, Ejectorpumpe
- 11: zweite Pumpe, Verdrängerpumpe
- 12: Abluftkanal
- 13: Sensor
- 14: Sperrvorrichtung, Ventil

## Patentansprüche

1. Verfahren zum Trocknen eines pulvrigen und/oder granularen Materials für die additive Fertigung, insbesondere zum Trocknen eines Metallpulvers oder einer Metallpulvermischung, wobei
das zu trocknende Material in einem evakuierbaren Volumen, insbesondere in einem Vakuumförderer, enthalten ist,
das evakuierbare Volumen mit einer Vakuum-Pumpanordnung fluidisch verbunden ist, und
die Vakuum-Pumpanordnung einlassseitig mit dem evakuierbaren Volumen fluidisch verbunden ist und auslasseitig mit der Umgebung des evakuierbaren Volumens,
**dadurch gekennzeichnet, dass** die Pumpanordnung eine Verdrängerpumpe zur Vakuumtrocknung und eine Strahlpumpe zur Vakuumförderung, insbesondere eine ein- oder mehrstufige Ejectorpumpe zur Vakuumförderung, oder einen Verdichter, insbesondere einen Seitenkanalverdichter, zur Vakuumförderung umfasst.

2. Verfahren nach dem Oberbegriff des Anspruchs 1, insbesondere nach Anspruch 1, **dadurch gekennzeichnet, dass** die Vakuum-Pumpanordnung auslassseitig einen Sensor zur Erfassung der Feuchtigkeit des aus dem evakuierbaren Volumens abgepumpten Fluids umfasst, wobei mit dem Sensor die Restfeuchte des pulvrigen und/oder granularen Materials als Funktion der Feuchtigkeit im abgepumpten Fluid erfasst wird.

3. Verfahren nach Anspruch 2, **gekennzeichnet durch** eine Kalibrierung des Sensors mittels eines Testmediums.

4. Verfahren nach Anspruch 2 oder 3, **dadurch gekennzeichnet, dass** die Pumpanordnung eine Verdrängerpumpe, eine Strahlpumpe, insbesondere eine ein- oder mehrstufige Ejectorpumpe, und/oder einen Verdichter, insbesondere einen Seitenkanalverdichter, umfasst.

5. Verfahren nach Anspruch 4, **dadurch gekennzeichnet, dass** der Sensor an der Verdrängerpumpe auslassseitig, insbesondere an oder in einem auslassseitigen Strömungskanal der Verdrängerpumpe, angeordnet ist.

6. Verfahren nach einem der Ansprüche 1 bis 5, **dadurch gekennzeichnet, dass** in dem evakuierbaren Volumen mit der Pumpanordnung eine Saugfluidströmung, insbesondere Saugluftströmung, erzeugt wird, so dass das pulvrige und/oder granulare Material durch einen Volumen-Einlass mittels Saugfluidströmung, insbesondere Saugluftströmung, in das evakuierbare Volumen hineinförderbar und durch einen Volumen-Auslass, bevorzugt mittels Saugfluidströmung, insbesondere Saugluftströmung, aus dem evakuierbaren Volumen herausförderbar ist.

7. Verfahren nach einem der Ansprüche 1 bis 6, **dadurch gekennzeichnet, dass** zwischen der Pumpenanordnung und dem evakuierbaren Volumen zumindest eine Sperrvorrichtung betätigbar ist.

8. Verfahren nach einem der Ansprüche 2 bis 7, **dadurch gekennzeichnet, dass** zumindest eine Referenzfeuchtigkeit erfasst wird, welche bevorzugt in der Umgebung des evakuierbaren Volumens erfasst wird.

9. Verfahren nach einem der Ansprüche 2 bis 8, **dadurch gekennzeichnet, dass** für die Ermittlung der Restfeuchte des pulvrigen und/oder granularen Materials das Sensorsignal und die Änderung des Sensorsignals mit der Zeit berücksichtigt wird.

10. Verfahren nach einem der Ansprüche 1 bis 9, **dadurch gekennzeichnet, dass** das evakuierbare Volumen beheizt wird.

11. Vorrichtung (1) zum Trocknen eines pulvrigen und/oder granularen Materials (2) für die additive Fertigung, insbesondere zum Trocknen eines Metallpulvers oder einer Metallpulvermischung, wobei
die Vorrichtung (1) ein evakuierbares Volumen (3) umfass, in welches das zu trocknende Material (2) einfüllbar ist,
eine Vakuum-Pumpanordnung (7) vorgesehen ist, die mit dem evakuierbaren Volumen (3) fluidisch verbunden ist, und
die Vakuum-Pumpanordnung (7) einlassseitig mit dem evakuierbaren Volumen (3) fluidisch verbunden ist und auslassseitig mit der Umgebung des evakuierbaren Volumens (3),
**dadurch gekennzeichnet, dass** die Pumpanordnung (7) eine Verdrängerpumpe (11) zur Vakuumtrocknung und eine Strahlpumpe (10) zur Vakuumförderung, insbesondere eine ein- oder mehrstufige Ejectorpumpe (10) zurVakuumförderung, oder einen Verdichter, insbesondere einen Seitenkanalverdichter, zur Vakuumförderung umfasst.

12. Vorrichtung (1) nach dem Oberbegriff des Anspruchs 11, insbesondere nach Anspruch 11, **dadurch gekennzeichnet, dass** die Vakuum-Pumpanordnung (7) auslassseitig einen Sensor (13) zur Erfassung der Feuchtigkeit des aus dem evakuierbaren Volumens (3) abgepumpten Fluids umfasst, wobei mit dem Sensor (13) die Restfeuchte des pulvrigen und/oder granularen Materials (2) als Funktion der Feuchtigkeit im abgepumpten Fluid erfassbar ist.

13. Vorrichtung (1) nach Anspruch 12, **dadurch gekennzeichnet, dass** die Pumpanordnung (7) eine Verdrängerpumpe (11), eine Strahlpumpe (10), insbesondere eine ein- oder mehrstufige Ejectorpumpe (10), und/oder einen Verdichter, insbesondere einen Seitenkanalverdichter, umfasst.

14. Vorrichtung (1) nach Anspruch 13, **dadurch gekennzeichnet, dass** der Sensor (13) an der Verdrängerpumpe (11) auslassseitig, insbesondere an oder in einem auslassseitigen Strömungskanal (12) der Verdrängerpumpe (11), angeordnet ist.

15. Vorrichtung (1) nach einem der Ansprüche 11 bis 14, **dadurch gekennzeichnet, dass** in dem evakuierbaren Volumen (3) mit der Pumpanordnung (7) eine Saugfluidströmung, insbesondere Saugluftströmung, erzeugbar ist, so dass das pulvrige und/oder granulare Material (2) durch einen Volumen-Einlass mittels Saugfluidströmung, insbesondere Saugluftströmung, in das evakuierbare Volumen (3) hineinförderbar und durch einen Volumen-Auslass, bevorzugt mittels Saugfluidströmung, insbesondere Saugluftströmung, aus dem evakuierbaren Volumen (3) herausförderbar ist.

16. Vorrichtung (1) nach einem der Ansprüche 11 bis 15, **gekennzeichnet durch** zumindest eine Sperrvorrichtung (14), welche zwischen der Pumpenanordnung (7) und dem evakuierbaren Volumen (3) angeordnet ist.

17. Vorrichtung (1) nach einem der Ansprüche 11 bis 16, **gekennzeichnet durch** zumindest ein Heizmittel, womit das evakuierbare Volumen (3) beheizbar ist.

18. Vakuumförderer (4) zum Fördern eines pulvrigen und/oder granularen Materials (2) für die additive Fertigung, insbesondere zum Fördern eines Metallpulvers oder einer Metallpulvermischung, **dadurch gekennzeichnet, dass** der Vakuumförderer (4) eine Vorrichtung (1) zum Trocknen des pulvrigen und/oder granularen Materials nach einem der Ansprüche 11 bis 17 umfasst.

19. Vakuumförderer (4) zum Fördern eines pulvrigen und/oder granularen Materials (2) für die additive Fertigung, insbesondere zum Fördern eines Metallpulvers oder einer Metallpulvermischung, insbesondere nach Anspruch 18, **dadurch gekennzeichnet, dass** in dem Vakuumförderer (4) ein Verfahren zum Trocknen des pulvrigen und/oder granularen Materials (2) nach einem der Ansprüche 1 bis 10 betrieben wird.
